# EUROPÄISCHE PATENTANMELDUNG

(11) **EP 3 628 694 A1**
(43) Veröffentlichungstag der Anmeldung: **01.04.2020**
(21) Anmeldenummer: 18196743.1
(22) Anmeldetag: 26.09.2018
(51) Int. Cl.: C08G 18/48, C08G 18/50, C08G 18/66, C08G 18/75, C08G 18/76, C08G 18/12, C08G 18/16, C08G 18/20, C08G 18/22, C08G 18/24, C09D 175/08, C08G 18/32

(54) **LÖSEMITTELARME BESCHICHTUNGSSYSTEME FÜR TEXTILIEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft hitzehärtbare Zweikomponenten-(2K)-Beschichtungsmassen enthaltend mindestens ein NCO-Prepolymer, mindestens ein Polyurethanpolyol, mindestens ein neutraler Terbium(III)-1,3-Dicarbonylat-Komplex als Katalysator und gegebenenfalls mindestens einen weiteren Katalysator. Weiterhin ist Gegenstand der Erfindung ein Verfahren zur Herstellung der hitzehärtbare Zweikomponenten-(2K)-Beschichtungsmassen, ein Verfahren zur Beschichtung von Substraten mit der erfindungsgemäßen Beschichtungszusammensetzung, Verbundstrukturen, enthaltend gehärtete erfindungsgemäße Beschichtungsmassen und auch die Verwendung der erfindungsgemäßen Beschichtungsmassen zur Herstellung von elastischen Beschichtungen oder elastischen Filmen.

## Beschreibung

Die vorliegende Erfindung betrifft hitzehärtbare Zweikomponenten-(2K)-Beschichtungsmassen enthaltend mindestens ein NCO-Prepolymer, mindestens ein Polyurethanpolyol, mindestens ein neutraler Terbium(III)-1,3-Dicarbonylat-Komplex als Katalysator und gegebenenfalls mindestens einen weiteren Katalysator. Weiterhin ist Gegenstand der Erfindung ein Verfahren zur Herstellung der hitzehärtbare Zweikomponenten-(2K)-Beschichtungsmassen, ein Verfahren zur Beschichtung von Substraten mit der erfindungsgemäßen Beschichtungszusammensetzung, Verbundstrukturen, enthaltend gehärtete erfindungsgemäße Beschichtungsmassen und auch die Verwendung der erfindungsgemäßen Beschichtungsmassen zur Herstellung von elastischen Beschichtungen oder elastischen Filmen.

Lösemittelfreie oder -arme Beschichtungszusammensetzungen für Textilien basierend auf NCO-Prepolymeren sind allgemein bekannt und beispielsweise in der DE 2 902 090 A1 beschrieben. Die Beschichtungssysteme umfassen dabei 2 Bestandteile, ein Ketoxim-blockiertes Polyisocyanat und eine Verbindung, die zwei Aminogruppen aufweist, die bei Temperaturen oberhalb von 120 °C miteinander reagieren. Bei diesen Temperaturen werden die Ketoximgruppen abgespalten und die NCO-Gruppen freigesetzt und stehen zur Reaktion mit der Aminkomponente zur Verfügung. Die beschriebenen Systeme weisen weiterhin eine gute Lagerstabilität bei Umgebungstemperaturen auf. Aus den Beschichtungszusammensetzungen können elastische Filme erhalten werden, die eine akzeptable mechanische Stabilität aufweisen. Bei der Filmbildung werden jedoch immer Ketoxime, wie Butanonoxim, freigesetzt. Nachtteilig an diesen Systemen ist ferner, dass stets Reste des Blockierungsmittels in der resultierenden Beschichtung zurückbleiben und einen unangenehmen Geruch des Produktes verursachen. Des Weiteren wird bei Butanonoxim vermutet, dass es sich um eine gesundheitsgefährdende Substanz handeln könnte. Aktuell werden zu diesem Stoff Evaluierungen durchgeführt, um die Toxikologie des Stoffes zu bewerten. Je nach Ergebnis dieser Studien könnte es bei der Verwendung dieses Produktes in einigen Bereichen zu Veränderungen kommen, entweder durch die Verpflichtung zu zusätzlichen Kontrollmaßnahmen oder zum Wunsch nach Substitution dieses Produktes.

Ein grundsätzliches Problem bei Systemen mit blockierten Isocyanaten ist das Freisetzen solcher Blockierungsmittel während des Härtungsprozesses. Jedes Blockierungsmittel kann nach Härtung in Resten in der Beschichtung zurückbleiben. Weiterhin wird ein Teil des Blockierungsmittels in die Abluft freigesetzt. Niedermolekulare Blockierungsmittel tragen alle ein gewisses toxisches Potential, was bei Kontakt dieser beschichteten Textilien mit dem Endanwender zu gesundheitlichen Gefährdungen führen könnte. Darüber hinaus benötigt man für den Herstellungsprozess noch eine spezielle Abluftbehandlung.

Daher besteht stets der Bedarf nach alternativen, lösemittelarmen Beschichtungszusammensetzungen, die bei Umgebungstemperatur lagerstabil sind und bei ihrer Vernetzung bzw. Ausreaktion und Filmbildung keine Blockierungsmittel wie Ketoxime oder andere Verbindungen freisetzen. Auch sollte die Aushärtung dieser Beschichtungszusammensetzungen bei erhöhter Temperatur innerhalb weniger Minuten zu klebfreien Filmen erfolgen. Darüber hinaus sollten die erhaltenen Beschichtungen die vorteilhaften Eigenschaften der im Stand der Technik bekannten Systeme aufweisen.

Es sind Systeme im Stand der Technik bekannt, bei denen auf die Abspaltung von Blockierungsmitteln verzichtet werden kann (z. B. DE-A 196 32 925). Die dort beschriebenen reaktionsfähigen Massen enthalten Katalysatoren, die bei Raumtemperatur eine besonders hohe Latenz besitzen, bei erhöhter Temperatur jedoch sehr aktiv sind. DE-A 196 32 925 offenbart ein System, bestehend aus einem dispergierten festen Diol, das mit einem schwefelvergifteten Zinnkatalysator zur Reaktion gebracht wird. Solch ein System ist in seiner Zubereitung kompliziert und die Auswahl der Polyole ist eingeschränkt, da bei der Mahlung bestimmte Korngrößenprofile einzuhalten sind und die Dispersion durch verschiedene Additive stabilisiert werden muss. Aufgrund der notwendigen Dispergierung des Polyols müssen hier jedoch organische Lösungsmittel eingesetzt werden. Darüber hinaus ist die Verwendung von zinnhaltigen Katalysatoren aufgrund der hohen Toxizität von zinnorganischen Verbindungen sehr problematisch.

Weitere Beschichtungssysteme, die auf den Einsatz von Blockierungsmitteln verzichten, sind in der WO 2003/002627 A beschrieben. Hier werden Mischungen von isocyanathaltigen Prepolymeren und Polyolen mit Hilfe von Katalysatoren ausgehärtet, die auf Metallkomplexen verschiedener 1,3-Dicarbonylat-Anionen beruhen. Als Polyolkomponente werden Diole mit aliphatischem, cycloaliphatischem oder aromatischem Gerüst verwendet, deren zahlenmittlere Molgewichte unter 500 g/mol liegen. Bevorzugtes Diol ist 1,4-Butandiol. Diese Diole müssen bei Raumtemperatur flüssig sein und als Lösungsmittel für die Urethanisierungskatalysatoren verwendet werden, in der Regel unter Zugabe von 5-20% Lösungsmittel. Die verwendeten Katalysatoren sind häufig Materialien, die Kristallwasser enthalten und sich daher nur in sehr polaren Diolen unter Verwendung sehr polarer Lösungsmittel lösen. Bei Verwendung von unpolareren Komponenten als 1,4-Butandiol ist das homogene Lösen und Verteilen des Katalysators in der Beschichtungsformulierung kaum möglich, so dass es zu schlechter oder zu inhomogener Aushärtung kommt.

Katalysatoren für die Urethanisierungsreaktion beschreiben die DE 2004 012 875 und die DE 2004 012 876. Als Katalysatoren werden Metallkomplexe auf Basis von beta-Diketonen beschrieben. Die Untersuchungen wurden dabei ausschließlich an Modellsystemen durchgeführt. Solche Modellsysteme mit monomeren Diisocyanaten und relativ niedermolekularen Diolen unterscheiden sich deutlich von Formulierungen die für die Textilbeschichtungen verwendet werden, hinsichtlich der eingesetzten Komponenten und bezüglich der Aushärtung der Formulierungen. Die in der Technik üblichen Textilbeschichtungen enthalten Komponenten mit deutlich höheren Molgewichten, als die Modelsysteme. Die Mischbarkeit der Katalysatoren oder die Löslichkeit dieser Katalysatoren in diesen höhermolekularen Komponenten ist nicht zwingend gegeben, so dass die Beschichtungen nicht zu einem klebfreien Film ausgehärtet werden können.

Daher besteht weiterhin Bedarf an neuen Beschichtungsformulierungen für Textilbeschichtungen. Diese Beschichtungsformulierungen sollen keine Blockierungsmittel mehr enthalten, keine toxischen Katalysatoren wie organische Zinnverbindungen und idealerweise nur sehr wenig Lösungsmittel enthalten. Bei Raumtemperatur soll die Beschichtungsformulierung nur in geringen Mengen reagieren, d. h. eine hohe Topfzeit besitzen, bei hohen Temperaturen (> 100 °C) allerdings sehr schnell abreagieren.

Aufgabe der vorliegenden Erfindung war es daher, zur Textilbeschichtung geeignete, lösemittelarme und blockierungsmittelfreie Beschichtungszusammensetzungen bereitzustellen, die bei Umgebungstemperatur lagerstabil sind und im Beschichtungsverfahren bei Temperaturen > 100 °C schnell zu klebfreien Filmen aushärten. Zudem sollen die aus entsprechenden Beschichtungszusammensetzungen erhaltenen Filme gute elastische und mechanische Eigenschaften aufweisen.

Es wurde nun überraschend gefunden, dass Zweikomponenten-Beschichtungsmittel auf Basis von NCO-Prepolymeren und Polyurethanpolyolen als Kettenverlängerer, die bevorzugt flüssig und lösungsmittelarm sind (≤ 10 Gew% Lösungsmittelanteile) sind, in der Anwesenheit von mindestens einem neutralen Terbium(III)-1,3-Dicarbonylat-Komplex als Katalysator die zuvor genannten Anforderungen erfüllen.

Gegenstand der Erfindung sind hitzehärtbare Zweikomponenten- (2K)-Beschichtungsmassen enthaltend
A) mindestens ein NCO-Prepolymer,
B) mindestens ein Polyurethanpolyol,
C1) mindestens ein neutraler Terbium(III)-1,3-Dicarbonylat-Komplex als Katalysator,
   und gegebenenfalls
C2) mindestens einen weiteren von C1) unterschiedlichen Katalysator.

Die erfindungsgemäßen hitzehärtbaren Zweikomponenten-(2K)-Beschichtungsmassen zeichnen sich dadurch aus, dass aus ihnen hergestellte und ausgehärtete Filme besonders guten mechanischen Filmeigenschaften aufweisen. Bei Raumtemperatur bleiben die erfindungsgemäßen hitzehärtbaren Zweikomponenten-(2K)-Beschichtungsmassen weitestgehend stabil, d. h. eine verfrühte Vernetzung findet nur in untergeordnetem Maße statt. Für die Verarbeitung im industriellen Maßstab verfügen die erfindungsgemäßen hitzehärtbaren Zweikomponenten-(2K)-Beschichtungsmassen über eine ausreichende Topfzeit.

Unter einem neutralen Terbium(III)-1,3-Dicarbonylat-Komplex wird im Sinne der Erfindung ein ungeladener Komplex aus einem Terbium(III)-Kation und drei 1,3-Dicarbonylat-Anionen verstanden, also ein Terbium(III)-tris-(1,3-Dicarbonylat)-Komplex. Jedes 1,3-Dicarbonylat ist ein Monoanion. Wenn im Folgenden beispielsweise von "Terbium(III)-2,2,6,6-tetramethyl-3,5-heptandionat" gesprochen wird, ist damit ein Terbium(III)-tris-(2,2,6,6-tetramethyl-3,5-heptandionat)-Komplex (Tb(dpm)₃) gemeint.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

In einer bevorzugten Ausführungsform enthalten die erfindungsgemäßen hitzehärtbaren Zweikomponenten-(2K)-Beschichtungsmassen
A) 10 bis 70 Gew.-% von mindestens einem NCO-Prepolymer,
B) 10 bis 70 Gew.-% von mindestens einem Polyurethanpolyol,
Cl) 0,01 bis 10 Gew.-% von mindestens ein neutraler Terbium(III)-1,3-Dicarbonylat-Komplex als Katalysator,
C2) 0 bis 10 Gew.-% von einem weiteren von C1) unterschiedlichen Katalysator,
D) 0 bis 10 Gew.-% von einem organischen Lösungsmittel,
E) 0 bis 20 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

In einer weiteren bevorzugten Ausführungsform enthalten die erfindungsgemäßen hitzehärtbaren Zweikomponenten-(2K)-Beschichtungsmassen
A) 20 bis 70 Gew.-% von mindestens einem NCO-Prepolymer,
B) 20 bis 70 Gew.-% von mindestens einem Polyurethanpolyol,
C1) 0,01 bis 10 Gew.-%, vorzugsweise 0,01 bis 5 Gew.-% von mindestens ein neutraler Terbium(III)-1,3-Dicarbonylat-Komplex als Katalysator,
C2) 0 bis 10 Gew.-%, vorzugsweise 0 bis 5 Gew.-% von einem weiteren von C1) unterschiedlichen Katalysator,
D) 0 bis 10 Gew.-%, vorzugsweise 0 bis 5 Gew.-% von einem organischen Lösungsmittel,
E) 0 bis 20 Gew.-%, vorzugsweise 0 bis 15 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

In einer weiteren bevorzugten Ausführungsform enthalten die erfindungsgemäßen hitzehärtbaren Zweikomponenten-(2K)-Beschichtungsmassen
A) 25 bis 70 Gew.-% von mindestens einem NCO-Prepolymer,
B) 25 bis 70 Gew.-% von mindestens einem Polyurethanpolyol,
C1) 0,01 bis 5 Gew.-%, vorzugsweise 0,01 bis 2 Gew.-% von mindestens ein neutraler Terbium(III)-1,3-Dicarbonylat-Komplex als Katalysator,
C2) 0 bis 5 Gew.-%, vorzugsweise 0 bis 2 Gew.-% von einem weiteren von C1) unterschiedlichen Katalysator,
D) 0 bis 10 Gew.-%, vorzugsweise 0 bis 5 Gew.-% von einem organischen Lösungsmittel,
E) 0 bis 20 Gew.-%, vorzugsweise 0 bis 15 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

In einer weiteren bevorzugten Ausführungsform enthalten die erfindungsgemäßen hitzehärtbaren Zweikomponenten-(2K)-Beschichtungsmassen
A) 30 bis 65 Gew.-% von mindestens einem NCO-Prepolymer,
B) 30 bis 65 Gew.-% von mindestens einem Polyurethanpolyol,
Cl) 0,01 bis 5 Gew.-%, vorzugsweise 0,01 bis 2 Gew.-% von mindestens ein neutraler Terbium(III)-1,3-Dicarbonylat-Komplex als Katalysator,
C2) 0 bis 5 Gew.-%, vorzugsweise 0 bis 2 Gew.-% von einem weiteren von C1) unterschiedlichen Katalysator,
D) 0 bis 10 Gew.-%, vorzugsweise 0 bis 5 Gew.-% von einem organischen Lösungsmittel,
E) 0 bis 20 Gew.-%, vorzugsweise 0 bis 15 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

In einer weiteren bevorzugten Ausführungsform enthalten die erfindungsgemäßen hitzehärtbaren Zweikomponenten-(2K)-Beschichtungsmassen
A) 40 bis 58 Gew.-% von mindestens einem NCO-Prepolymer,
B) 40 bis 58 Gew.-% von mindestens einem Polyurethanpolyol,
Cl) 0,01 bis 5 Gew.-%, vorzugsweise 0,01 bis 2 Gew.-% von mindestens ein neutraler Terbium(III)-1,3-Dicarbonylat-Komplex als Katalysator,
C2) 0 bis 5 Gew.-%, vorzugsweise 0 bis 2 Gew.-% von einem weiteren von C1) unterschiedlichen Katalysator,
D) 0 bis 10 Gew.-%, vorzugsweise 0 bis 5 Gew.-% von einem organischen Lösungsmittel,
E) 0 bis 20 Gew.-%, vorzugsweise 0 bis 15 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

In einer weiteren bevorzugten Ausführungsform bestehen die erfindungsgemäßen hitzehärtbaren Zweikomponenten-(2K)-Beschichtungsmassen zu 95%, vorzugsweise zu 98%, besonders bevorzugt zu 99% und noch bevorzugter zu 100% aus den Komponenten A), B), C1), C2), D) und E).

In einer weiteren bevorzugten Ausführungsform enthalten die erfindungsgemäßen hitzehärtbaren Zweikomponenten-(2K)-Beschichtungsmassen kein organisches Lösungsmittel.

In einer weiteren bevorzugten Ausführungsform enthalten die erfindungsgemäßen hitzehärtbaren Zweikomponenten-(2K)-Beschichtungsmassen kein organisches Lösungsmittel und keine Hilfs-und Zusatzstoffe.

In einer weiteren bevorzugten Ausführungsform enthalten die erfindungsgemäßen hitzehärtbaren Zweikomponenten-(2K)-Beschichtungsmassen keinen weiteren Katalysator C2.

In einer weiteren bevorzugten Ausführungsform enthalten die erfindungsgemäßen hitzehärtbaren Zweikomponenten-(2K)-Beschichtungsmassen kein organisches Lösungsmittel, keine Hilfs- und Zusatzstoffe und keinen weiteren Katalysator C2.

In einer weiteren bevorzugten Ausführungsform beträgt das Äquivalentverhältnis der freien NCO-Gruppen des mindestens einem NCO-Prepolymers A) zu den NCO-reaktiven Hydroxylgruppen des mindestens einem Polyurethanpolyols B) 0,9 bis 1,3, bevorzugt 1,0 bis 1,2.

### NCO-Prepolymer A)

Die Herstellung geeigneter NCO-Prepolymere A) erfolgt durch Umsetzung von monomeren organischen Polyisocyanaten a), wobei es bevorzugt um monomere organische Diisocyanate handelt, mit mindestens einer NCO-reaktiven Komponente b).

Geeignete monomere organische Polyisocyanate a) sind beispielsweise 1,4-Diisocyanatobutan (BDI), 1,5-Diisocyanatopentan (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3-isocyanatomethyl-3,3,5-trimethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xylylendiisocyanat; XDI), 1,3- und 1,4-Bis(1-isocyanato-1-methylethyl)-benzol (TMXDI), Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin und Mischungen von mindestens zwei hiervon. Besonders geeignete monomere organische Polyisocyanate sind 1,5-Diisocyanatopentan, 1,6-Hexamethylendiisocyanat und Isophorondiisocyanat, ganz besonders bevorzugt ist Isophorondiisocyanat.

Geeignete NCO-reaktive Verbindungen b) sind vor allem Polyole, wie z. B. Polyetherpolyole, Polyesterpolyole, Polycarbonatpolyole und mehrwertige Alkohole. Als Polyole können höhermolekulare und in untergeordneter Menge auch niedermolekulare Hydroxylverbindungen eingesetzt werden.

Bevorzugt umfasst die zur Herstellung der Prepolymerkomponente A) verwendete NCO-reaktive Komponente b) wenigstens ein Polyol bevorzugt ausgewählt aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon. Das zahlenmittlere Molgewicht Mₙ des mindestens einen Polyols liegt bevorzugt in einem Bereich von 300 bis 8000 g/mol, oder bevorzugt in einem Bereich von 500 bis 7000 g/mol, oder bevorzugt in einem Bereich von 500 bis 6000 g/mol. Bevorzugt weist das mindestens eine Polyol eine mittlere Funktionalität an Hydroxylgruppen in einem Bereich von 1,5 bis 4,0, oder bevorzugt in einem Bereich von 1,8 bis 3,5, oder bevorzugt in einem Bereich von 2,0 bis 3,0 auf. Der Ausdruck "polymere" Polyole, wie Polyether-Polyole oder Polyestherpolyole bedeutet hier insbesondere, dass die oben genannten Polyole mindestens zwei, bevorzugt mindestens drei miteinander verbundene Wiederholungseinheiten der gleichen oder sich abwechselnder Struktureinheiten aufweisen.

In einer weiteren bevorzugten Ausführungsform umfasst die mindestens eine NCO-reaktive Komponente b) mindestens ein Polyol b1) mit einem zahlenmittleren Molgewicht Mₙ ≥ 500 g/mol und mindestens ein Polyol b2) mit einem zahlenmittleren Molgewicht Mₙ im Bereich von 62 g/mol bis 500 g/mol.

In einer weiteren bevorzugten Ausführungsform ist das mindestens eine Polyol b1) ausgewählt aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol b1) vorzugsweise ein zahlenmittleres Molgewicht Mₙ, bestimmt durch Gelpermeationschromatographie in Tetrahydrofuran bei 23°C gemäß DIN 55672-1:2016-03, im Bereich von 500 bis 8000 g/mol, besonders bevorzugt in einem Bereich von 500 bis 7000 g/mol und noch bevorzugter in einem Bereich von 500 bis 6000 g/mol aufweist.

Das zahlenmittlere Molekulargewicht wird im Rahmen dieser Anmeldung stets bestimmt durch Gelpermeationschromatographie (GPC) in Tetrahydrofuran bei 23°C. Es wird dabei vorgegangen nach DIN 55672-1 (Ausgabedatum März 2016): "Gelpermeationschromatographie, Teil 1- Tetrahydrofuran als Elutionsmittel" (SECurity GPC-System von PSS Polymer Service, Flussrate 1,0 ml/min; Säulen: 2xPSS SDV linear M, 8x300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Durch die Variation der zahlenmittleren Molekulargewichte und der Funktionalität der Polyole können die Eigenschaften der entstehenden Filme, wie beispielsweise Elastizität, Module, Schmelztemperatur und Wasserquellung beeinflusst werden.

Als Polyetherpolyole können die aus der Polyurethanchemie an sich bekannten, höhermolekularen Polyetherpolyole, eingesetzt werden, die in an sich bekannter Weise durch Alkoxylierung von geeigneten Starter-Molekülen zugänglich sind.

Geeignete Starter-Moleküle sind beispielsweise einfache Polyole wie Ethylenglykol, 1,2- bzw. 1,3-Propylenglykol und 1,4-Butandiol, 1,6-Hexandiol, Neopentylglykol, 2-Ethylhexandiol-1,3, Glyzerin, Trimethylolpropan, Pentaerythrit, Sorbit sowie niedermolekulare, Hydroxylgruppen aufweisende Ester derartiger Polyole mit aliphatischen oder aromatischen Dicarbonsäuren, sowie niedermolekulare Ethoxylierungs- oder Propoxylierungsprodukte derartiger einfacher Polyole oder beliebige Gemische aus mindestens zwei derartiger modifizierter oder nicht modifizierter Alkohole, Wasser, organische Polyamine mit mindestens zwei N-H-Bindungen oder beliebige Gemische aus mindestens zweier derartiger Starter-Moleküle. Geeignet sind auch aromatische Hydroxyverbindungen wie z.B. Bisphenol A. Für die Alkoxylierung geeignet sind cyclische Ether wie Tetrahydrofuran und/oder Alkylenoxide wie Ethylenoxid, Propylenoxid, Butylenoxide, Styroloxid oder Epichlorhydrin, insbesondere Ethylenoxid und/oder Propylenoxid, die in beliebiger Reihenfolge oder auch im Gemisch mindestens zweier davon bei der Alkoxylierung eingesetzt werden können.

Handelsnamen der geeigneten Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Besonders bevorzugt sind die Polyether auf Basis von Tetrahydrofuran wie die PolyTHF-Produkte verschiedener Molgewichte der BASF SE.

Ebenfalls bevorzugt sind Polyether ausgewählt aus der Gruppe bestehend aus bifunktionellen Polypropylenoxidethern auf Basis von Bisphenol A, bifunktionellen Polypropylenoxidethern auf Basis von Propylenglykol, trifunktionellen Polyethern aus Propylenoxid und Ethylenoxid auf Basis von Glycerin oder einem Gemisch von mindestens zwei hiervon.

Geeignete Polyesterpolyole sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester oder Gemische aus mindestens zwei hiervon verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester oder Gemische aus mindestens zwei hiervon. Daneben können auch Polyole wie Trimethylolpropan, Glycerin, Erythrit, Pentaerythrit, Trimethylolbenzol oder Trishydroxyethylisocyanurat oder Gemische aus mindestens zwei hiervon eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure oder Gemische aus mindestens zwei hiervon eingesetzt werden. Als Säurequelle können auch die entsprechenden Anhydride verwendet werden.

Sofern die mittlere Funktionalität des zu veresternden Polyols größer als 2 ist, können zusätzlich auch Monocarbonsäuren, wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen sowie Gemische aus mindestens zwei hiervon. Geeignete Lactone sind Caprolacton, Butyrolacton und Homologe. Bevorzugt ist Caprolacton.

Bevorzugte Polycarbonatpolyole sind solche, die beispielsweise durch Reaktion von Kohlensäurederivaten, wie Diphenylcarbonat, Dimethylcarbonat, Diethylcarbonat oder Phosgen, mit Polyolen, vorzugsweise Diolen, erhältlich sind. Als derartige Diole kommen beispielsweise Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentan-1,3-diol, Di-, Tri- oder Tetraethylenglykol, Dipropylenglykol, Polypropylenglykole, Dibutylenglykol, Polybutylenglykole, Bisphenol A, Tetrabrombisphenol A aber auch Lacton-modifizierte Diole oder Gemische aus mindestens zwei hiervon in Frage. Als Polyole zur Herstellung der Polycarbonatpolyole können auch Polyesterpolyole oder Polyetherpolyole eingesetzt werden.

Bevorzugt enthält die Diolkomponente zur Herstellung der Polycarbonatpolyole 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im Wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite. Bevorzugt sind solche Polycarbonate auf Basis von Hexandiol-1,6, sowie modifizierend wirkenden Co-Diolen wie z. B. Butandiol-1,4 oder auch von ε-Caprolacton. Weitere bevorzugte Polycarbonatdiole sind solche auf Basis von Mischungen aus Hexandiol-1,6 und Butandiol-1,4. Beispiele zu Polycarbonatpolyolen finden sich z. B. in der EP 1359177 A. Beispielsweise können als Polycarbonatdiole die Desmophen® C-Typen der Covestro AG verwendet werden, wie z. B. Desmophen® C 1100 oder Desmophen® C 2200.

Insbesondere können die zuvor erwähnten Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit CO₂ in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO₂ gibt zum Beispiel Chemical Communications 47(2011)141-163. Durch die Verwendung unterschiedlicher Katalysatorsysteme, Reaktionsbedingungen und/oder reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole.

Die NCO-reaktive Komponente b) kann neben den oben erwähnten hohermolekularen Polyolen b1), wie Polyetherpolyolen, Polyesterpolyolen, Polycarbonatpolyolen, Polyethercarbonatpolyolen und Polyestercarbonatpolyolen, auch zu einem Teil niedermolekulare Polyole b2) enthalten. Diese niedermolekularen Polyole b2) weisen vorzugsweise ein zahlenmittleres Molgewicht Mₙ im Bereich von 62 g/mol bis 500 g/mol auf, wobei das zahlenmittlere Molgewicht Mₙ durch Gelpermeationschromatographie in Tetrahydrofuran bei 23°C gemäß DIN 55672-1:2016-03 bestimmt wird.

Geeignete niedermolekulare Polyole sind kurzkettige, d.h. 2 bis 20 Kohlenstoffatome enthaltende, aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol oder Gemische aus mindestens zwei hiervon. Beispiele geeigneter Triole sind Trimethylolethan, Trimethylolpropan oder Glycerin, bevorzugt ist Trimethylolpropan.

In einer bevorzugten Ausgestaltung der Beschichtungszusammensetzung beinhaltet die NCO-reaktive Komponente b) mindestens zwei unterschiedliche Polyole, ein erstes Polyol b1) und mindestens ein weiteres Polyol b2). Bevorzugt ist das erste Polyol b1) ein Polyol mit einem zahlenmittleren Molgewicht Mₙ von mindestens ≥ 500 g/mol und das zweite Polyol b2) ein niedermolekulares Polyol mit einem zahlenmittleren Molgewicht Mₙ im Bereich von 62 g/mol bis 500 g/mol ist. Das Polyole b1) ist bevorzugt ausgewählt aus den oben genannten Gruppen für Polyetherpolyole, Polyesterpolyole, Polycarbonatpolyole, Polyethercarbonatpolyole und Polyestercarbonatpolyole. Das Polyole b2) ist bevorzugt ausgewählt aus den oben genannten Gruppe der niedermolekularen Polyole. Bevorzugt handelt es sich bei dem ersten Polyol b1) um ein PolyTHF mit einem zahlenmittleren Molgewicht Mₙ von 1000 g/mol oder 2000 g/mol und bei dem weiteren Polyol b2) um mindestens einen der oben genannten niedermolekularen Alkohole. Besonders bevorzugt ist die Kombination aus PolyTHF-basierten Polyethern mit einem zahlenmittleren Molgewicht Mₙ von 1000 g/mol und Trimethylolpropan. Dabei enthält diese Polyolmischung/die NCO-reaktiven Komponente b) mindestens 80 Gew% an PolyTHF-Polyether, bevorzugt mindestens 85 Gew% an PolyTHF-Polyether, jeweils bezogen auf das Gesamtgewicht der Polyolmischung/die NCO-reaktiven Komponente b).

Die Herstellung des mindestens einen NCO-Prepolymers A) erfolgt durch Umsetzung der Komponenten a) und b), indem man die genannten NCO-reaktiven Komponente b) mit überschüssigem monomeren Polyisocyanat a), vorzugsweise monomeren Diisocyanat a) umsetzt. Die NCO-reaktiven Komponente b) kann hierbei sowohl als Mischung mit der Komponente a) umgesetzt werden als auch durch sequentielle Zugabe in die Reaktionsmischung zugeführt werden. Dabei wird ein NCO/OH-Verhältnis von 15:1 bis 1,7:1, vorzugsweise von 12:1 bis 2:1 gewählt und gegebenenfalls überschüssiges Prepolymer durch bekannte technische Verfahren abgetrennt, wie z. B. Dünnschichtdestillation oder Extraktion. Bevorzugt ist ein NCO-Gehalt des erhaltenen mindestens einen NCO-Prepolymers A) von 4 bis 15 Gew%, bevorzugt von 6 bis 13 Gew%.

Bei der Herstellung des Prepolymers kann auch die mindestens einer NCO-reaktiven Komponente b) vorgelegt und anschließend das mindestens eine monomere Polyisocyanat a), vorzugsweise monomere Diisocyanat a) zugegeben werden oder auch in umgekehrter Reihenfolge verfahren werden.

Die Umsetzung erfolgt bevorzugt bei Temperaturen in einem Bereich von 23 und 120 °C, oder bevorzugt in einem Bereich von 50 bis 100 °C. Die Temperaturführung kann dabei vor und nach der Zugabe der einzelnen Komponenten a) und b) in diesem Bereich variiert werden. Die Umsetzung kann unter Zugabe von gängigen Lösemittel oder in Substanz, bevorzugt in Substanz durchgeführt werden. Zur Einstellung einer benötigten bestimmten Verarbeitungsviskosität kann nach erfolgter Reaktion noch Lösungsmittel in geringen Mengen zugegeben werden.

Die Umsetzung zu dem mindestens einen NCO-Prepolymer A) kann ohne Katalysator, aber auch in Gegenwart von Katalysatoren erfolgen, die die Bildung der Urethane aus Isocyanaten und Polyolkomponenten beschleunigen.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte einzusetzende Katalysatoren sind tertiäre Amine, Bismuth- und Zinnverbindungen der genannten Art.

Die beispielhaft genannten Katalysatoren können bei der Herstellung der erfindungsgemäßen Beschichtungszusammensetzung einzeln oder in Form beliebiger Mischungen untereinander eingesetzt werden und kommen dabei gegebenenfalls in Mengen von 0,01 bis 5,0 Gew.-%, bevorzugt 0,1 bis 2 Gew.-%, berechnet als Gesamtmenge an eingesetzten Katalysatoren bezogen auf die Gesamtmenge der verwendeten Ausgangsverbindungen, zum Einsatz.

Die Viskosität des erhaltenen mindestens einen NCO-Prepolymers A) liegt bevorzugt bei < 200000 mPas, oder besonders bevorzugt bei < 150000 mPas, oder ganz besonders bevorzugt bei < 100000 mPas, jeweils bestimmt gemäß bestimmt gemäß ISO 6721-10:1999. Die Viskosität kann dabei auch durch Zugabe von organischen Lösemitteln eingestellt werden, wobei ≤ 10 Gew.-%, bevorzugt ≤ 5 Gew.-% an organischen Lösemittel, bezogen auf die Gesamtmasse aus dem mindestens einen NCO-Prepolymer A) und Lösemittel, eingesetzt werden.

Die in den erfindungsgemäßen Beschichtungsmassen enthaltenden NCO-Prepolymere A) besitzen als Zahlenmittel bestimmte Molekulargewichte von 500 bis 10000, bevorzugt von 800 bis 4000 g/mol. Die NCO-Prepolymere A) weisen einen NCO-Gehalt von 4 bis 15 Gew%, bevorzugt von 6 bis 13 Gew% auf.

In einer bevorzugten Ausführungsform ist das mindestens eine NCO-Prepolymer A) aus mindestens einem monomeren Polyisocyanat a), vorzugsweise einem monomeren Diisocyanat und mindestens einer NCO-reaktiven Komponente b) aufgebaut, wobei die NCO-reaktiven Komponente b) mindestens ein Polyol b1) mit einem zahlenmittleren Molgewicht Mₙ ≥ 500 g/mol und mindestens ein Polyol b2) mit einem zahlenmittleren Molgewicht Mₙ im Bereich von 62 g/mol bis 500 g/mol umfasst, wobei das zahlenmittlere Molgewicht Mₙ durch Gelpermeationschromatographie in Tetrahydrofuran bei 23°C gemäß DIN 55672-1:2016-03 bestimmt wird.

In einer weiteren bevorzugten Ausführungsform ist das mindestens eine Polyol b1) ausgewählt aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol b1) vorzugsweise ein zahlenmittleres Molgewicht Mₙ, bestimmt durch Gelpermeationschromatographie in Tetrahydrofuran bei 23°C gemäß DIN 55672-1:2016-03, im Bereich von 500 bis 8000 g/mol, besonders bevorzugt in einem Bereich von 500 bis 7000 g/mol und noch bevorzugter in einem Bereich von 500 bis 6000 g/mol aufweist.

In einer weiteren bevorzugten Ausführungsform enthält die NCO-reaktive Komponente b) mindestens 80 Gew.-%, vorzugsweise mindestens 85 Gew.-% an Polyol b1), bezogen auf das Gesamtgewicht der Komponente b), wobei das Polyol b1) ein PolyTHF-Polyether ist vorzugsweise mit einem zahlenmittleren Molgewicht Mₙ im Bereich von 1000 g/mol bis 2000 g/mol bestimmt durch Gelpermeationschromatographie in Tetrahydrofuran bei 23°C gemäß DIN 55672-1:2016-03.

In einer weiteren bevorzugten Ausführungsform ist das mindestens eine NCO-Prepolymer A) aus mindestens einem monomeren Polyisocyanat a), vorzugsweise einem monomeren Diisocyanat und mindestens einer NCO-reaktiven Komponente b) aufgebaut, wobei die NCO-reaktiven Komponente b) mindestens ein Polyol b1) und mindestens ein Polyol b2) mit einem zahlenmittleren Molgewicht Mₙ im Bereich von 62 g/mol bis 500 g/mol umfasst, wobei das Polyol bl ein PolyTHF-Polyether ist vorzugsweise mit einem zahlenmittleren Molgewicht Mₙ im Bereich von 1000 g/mol bis 2000 g/mol, wobei das zahlenmittlere Molgewicht Mₙ jeweils durch Gelpermeationschromatographie in Tetrahydrofuran bei 23°C gemäß DIN 55672-1:2016-03 bestimmt wird.

### Polyurethanpolyol B)

Das in den erfindungsgemäßen hitzehärtbaren Zweikomponenten-(2K)-Beschichtungsmassen befindliche mindestens ein Polyurethanpolyol B) besteht aus Polyurethanen, die am Ende Hydroxylgruppen tragen. Die Herstellung des mindestens einen Polyurethanpolyol B) erfolgt durch Umsetzung von mindestens einem monomeren und / oder oligomeren Polyisocyanat c) mit mindestens einer NCO-reaktiven Komponente d). Die NCO-reaktiven Komponente d) umfasst mindestens ein Polyol d1) mit einem zahlenmittleren Molgewicht Mₙ ≥ 500 g/mol und mindestens ein Polyol d2) mit einem zahlenmittleren Molgewicht Mₙ im Bereich von 62 g/mol bis 500 g/mol, wobei das zahlenmittlere Molgewicht Mₙ durch Gelpermeationschromatographie in Tetrahydrofuran bei 23°C gemäß DIN 55672-1:2016-03 bestimmt wird.

Bei der Umsetzung von dem mindestens einen monomeren und / oder oligomeren Polyisocyanat c) mit der mindestens einen NCO-reaktiven Komponente d) wird ein NCO/OH-Verhältnis < 1 gewählt, um Polyurethane - das mindestens ein Polyurethanpolyol B) - mit terminalen Hydroxylgruppen zu erhalten.

Als das mindestens eine monomere und / oder oligomere Polyisocyanat c) können alle oben für das Polyisocyanate a) genannten monomere organische Polyisocyanate verwendet werden, entweder in ihrer monomeren Form oder nach Oligomerisierung zu oligomeren Polyisocyanaten. Darüber hinaus können die monomeren Polyisocyanate c) und die oligomeren Polyisocyanate c) auch als Mischung verwendet werden.

Bei der oligomeren Polyisocyanaten c), die aus den genannten monomeren Polyisocyanate hergestellt werden, handelt es sich bevorzugt um Uretdion-, Isocyanurat-, Iminooxadiazindion-, Urethan-, Allophanat-, Biuret- und/oder Oxadiazintriongruppen enthaltende oligomere Polyisocyanate c). Die Herstellung der oligomeren Polyisocyanate c) aus den oben genannten aliphatischen, cycloaliphatischen oder aromatischen monomeren Polyisocyanaten kann nach den üblichen Verfahren zur Oligomerisierung von Polyisocyanaten bzw. Diisocyanaten, wie sie z. B. in Laas et al., J. Prakt. Chem. 336, 1994, 185-200 beschrieben sind, und anschließende Abtrennung der nicht umgesetzten monomeren Polyisocyanate durch Destillation oder Extraktion erfolgen. Konkrete Beispiele für monomerenarme oligomere Polyisocyanate c) aus araliphatischen Diisocyanaten finden sich beispielsweise in JP-A 2005161691, JP-A 2005162271 und EP-A 0 081 713. Bevorzugte oligomere Polyisocyanate c) sind solche mit Uretdion-, Allophanat-, Isocyanurat-, Iminooxadiazindion- und/oder Biuretstruktur.

Bevorzugt wird mindestens ein monomeres und / oder oligomeres Polyisocyanat c) zur Herstellung des mindestens einen Polyurethanpolyols B) verwendet ausgewählt aus der Gruppe bestehend aus aromatischen Diisocyanaten wie 2,4- und 2,6-Diisocyanatotoluol (TDI), 2,4'- und 4,4'-Diisocyanatodiphenylmethan (MDI). Besonders bevorzugt ist 4,4'-Diisocyanatodiphenylmethan.

Als die mindestens einer NCO-reaktiven Komponente d) können alle oben für die mindestens einer NCO-reaktiven Komponente b) genannten Polyole verwendet werden. Dabei können für das mindestens eine Polyol d1) alle oben für Polyol b1) genannten Gruppen der Polyetherpolyole, Polyesterpolyole, Polycarbonatpolyole, Polyethercarbonatpolyole und Polyestercarbonatpolyole verwendet werden. Für das mindestens eine Polyol d2) kann die oben für Polyol b2) genannte Gruppe der niedermolekularen Polyole verwendet werden.

Bevorzugt handelt es sich bei dem ersten Polyol d1) um ein PolyTHF mit einem zahlenmittleren Molgewicht Mₙ von 1000 g/mol oder 2000 g/mol und bei dem weiteren Polyol d2) um mindestens einen der oben genannten niedermolekularen Alkohole. Besonders bevorzugt handelt es sich bei dem ersten Polyol d1) um eine Mischung aus einem PolyTHF mit einem zahlenmittleren Molgewicht Mₙ von 1000 g/mol und einem PolyTHF mit einem zahlenmittleren Molgewicht Mₙ von 2000 g/mol.

Die Herstellung des mindestens einen Polyurethanpolyols B) erfolgt durch Umsetzung von dem mindestens einen monomeren und / oder oligomeren Polyisocyanat c) mit der mindestens einen NCO-reaktiven Komponente d), indem man das mindestens einen monomeren und / oder oligomeren Polyisocyanat c) mit einem Überschuss der mindestens einen NCO-reaktiven Komponente d) umsetzt. Man wählt ein NCO/OH-Verhältnis von 0,05:1 bis 0,9:1, vorzugsweise von 0,1:1 bis 0,8:1, besonders bevorzugt von 0,15:1 bis 0,75:1.

Bei der Herstellung des mindestens einen Polyurethanpolyols B) kann die mindestens eine NCO-reaktive Komponente d) vorgelegt werden und anschließend das mindestens eine monomere und / oder oligomere Polyisocyanat c) zugegeben werden oder auch in umgekehrter Reihenfolge verfahren werden. Die Polyolkomponenten d1) und d2) können sowohl als Mischung mit dem mindestens einen monomeren und / oder oligomeren Polyisocyanat c) umgesetzt werden als auch durch sequentielle Zugabe in die Reaktionsmischung eingetragen werden.

Die Umsetzung erfolgt bevorzugt bei Temperaturen in einem Bereich von 23 und 120 °C, oder bevorzugt in einem Bereich von 50 bis 100 °C. Die Temperaturführung kann dabei vor und nach der Zugabe der einzelnen Komponenten in diesem Bereich variiert werden. Die Umsetzung kann unter Zugabe von gängigem Lösemittel oder in Substanz, bevorzugt in Substanz durchgeführt werden. Zur Einstellung einer benötigen bestimmten Verarbeitungsviskosität kann nach erfolgter Reaktion noch Lösungsmittel zugegeben werden.

Die Umsetzung kann ohne Katalysator, aber auch in Gegenwart von Katalysatoren erfolgen, die die Bildung der Urethane aus Isocyanaten und Polyolkomponenten beschleunigen. Als Katalysatoren kommen alle diejenigen Katalysatoren in Betracht, die oben für die Herstellung des mindestens ein NCO-Prepolymer A) genannt worden sind.

Die Viskosität der erhaltenen Polyurethanpolyole liegt bevorzugt bei < 200000 mPas, oder besonders bevorzugt bei < 150000 mPas, oder ganz besonders bevorzugt bei < 100000 mPas, jeweils bestimmt gemäß bestimmt gemäß ISO 6721-10:1999 Die Viskosität kann dabei auch durch Zugabe von organischen Lösemitteln eingestellt werden, wobei ≤ 10 Gew.-%, bevorzugt ≤ 5 Gew.-% an organischen Lösemittel, bezogen auf die Gesamtmasse des mindestens einen Polyurethanpolyols B) und Lösemittel, eingesetzt werden.

In einer bevorzugten Ausführungsform ist das mindestens eine Polyurethanpolyol B) aus mindestens einem monomeren und / oder oligomeren Polyisocyanat c) und mindestens einer NCO-reaktiven Komponente d) aufgebaut, wobei die NCO-reaktiven Komponente d) mindestens ein Polyol d1) mit einem zahlenmittleren Molgewicht Mₙ ≥ 500 g/mol und mindestens ein Polyol d2) mit einem zahlenmittleren Molgewicht Mₙ im Bereich von 62 g/mol bis 500 g/mol umfasst, wobei das zahlenmittlere Molgewicht Mₙ durch Gelpermeationschromatographie in Tetrahydrofuran bei 23°C gemäß DIN 55672-1:2016-03 bestimmt wird.

In einer weiteren bevorzugten Ausführungsform ist das mindestens eine Polyol d1) ausgewählt aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol d1) vorzugsweise ein zahlenmittleres Molgewicht Mₙ, bestimmt durch Gelpermeationschromatographie in Tetrahydrofuran bei 23°C gemäß DIN 55672-1:2016-03, im Bereich von 500 bis 8000 g/mol, besonders bevorzugt in einem Bereich von 500 bis 7000 g/mol und noch bevorzugter in einem Bereich von 500 bis 6000 g/mol aufweist.

In einer weiteren bevorzugten Ausführungsform ist das mindestens eine Polyurethanpolyol B) aus mindestens einem monomeren und / oder oligomeren Polyisocyanat c) und mindestens einer NCO-reaktiven Komponente d) aufgebaut, wobei die NCO-reaktiven Komponente d) mindestens ein Polyol d1) und mindestens ein Polyol d2) mit einem zahlenmittleren Molgewicht Mₙ im Bereich von 62 g/mol bis 500 g/mol umfasst, wobei das mindestens eine Polyol d1) ausgewählt ist aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol d1) vorzugsweise ein zahlenmittleres Molgewicht Mₙ im Bereich von 500 bis 8000 g/mol, besonders bevorzugt in einem Bereich von 500 bis 7000 g/mol und noch bevorzugter in einem Bereich von 500 bis 6000 g/mol aufweist, wobei das zahlenmittlere Molgewicht Mₙ jeweils durch Gelpermeationschromatographie in Tetrahydrofuran bei 23°C gemäß DIN 55672-1:2016-03 bestimmt wird.

In einer bevorzugten Ausführungsform ist das mindestens eine Polyol b1) und das mindestens eine Polyol d1) ausgewählt aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol b1) und das Polyol d1) vorzugsweise ein zahlenmittleres Molgewicht Mₙ, bestimmt durch Gelpermeationschromatographie in Tetrahydrofuran bei 23°C gemäß DIN 55672-1:2016-03, im Bereich von 500 bis 8000 g/mol, besonders bevorzugt in einem Bereich von 500 bis 7000 g/mol und noch bevorzugter in einem Bereich von 500 bis 6000 g/mol aufweist.

### Katalysatoren C1) und C2

Die erfindungsgemäßen hitzehärtbaren Zweikomponenten-(2K)-Beschichtungsmassen enthalten mindestens einen neutralen Terbium(III)-1,3-Dicarbonylat-Komplex als Katalysator C1), und gegebenenfalls mindestens einen weiteren von C1) unterschiedlichen Katalysator C2).

Als Katalysator C1) eignen sich dabei alle neutralen Komplexe aus einem Terbium(III)-Kation und gleichen oder verschiedenen 1,3-Dicarbonylat-Anionen. Jedes 1,3-Dicarbonylat ist ein Monoanion und der neutrale Komplex ist ungeladen. Ein erfindungsgemäßer Terbium(III)-1,3-Dicarbonylat-Komplex besteht aus einem Terbium(III)-Kation und drei 1,3-Dicarbonylat-(Mono)Anionen.

Geeignete 1,3-Dicarbonylat-Anionen weisen eine Struktur gemäß Formel (I) auf, 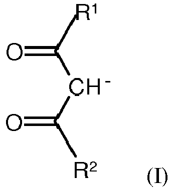 wobei
R¹ und R² für gleiche oder verschiedene Gruppen R³ oder OR³ stehen, wobei
R³ für eine C₁-C₂₀-Alkyl, C₁-C₁₂-Cycloalkyl-, C₁-C₁₂-Aryl, C₁-C₂₀-Alkenyl-, C₁-C₁₂-Aralkyl- oder C₁-C₁₂-Alkylethergruppe steht.

Vorzugsweise ist der Katalysator C1) ein neutraler Komplexe aus einem Terbium(III)-Kation und gleichen oder verschiedenen 1,3-Dicarbonylat-Anionen ausgewählt aus der Gruppe bestehend aus 2,2,6,6-Tetramethyl-3,5-heptandionat (Dpm) und Acetylacetonat (Acac) bzw. 2,4-Pentandionat.

In einer bevorzugten Ausführungsform ist der mindestens eine neutrale Terbium(III)-1,3-Dicarbonylat-Komplex Terbium(III)-2,2,6,6-tetramethyl-3,5-heptandionat (Tb(dpm)₃) oder Terbium(III)-2,4-pentandionat (Tb(acac)₃). In einer bevorzugten Ausführungsform ist der mindestens eine neutrale Terbium(III)-1,3-Dicarbonylat-Komplex Terbium(III)-2,2,6,6-tetramethyl-3,5-heptandionat.

Die erfindungsgemäßen hitzehärtbaren Zweikomponenten-(2K)-Beschichtungsmassen gegebenenfalls enthaltende mindestens eine Katalysator C2 ist unterschiedlich von dem Katalysator C1.

As Katalysator C2 eigenen sich die nach dem Stand der Technik bekannten und üblichen tertiären Amine, wie z. B. tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Organometallkomplexe wie 1,3-Metalldicarbonylate und 1,3-Metalloxodicarbonylate; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugt ist der mindestens eine weitere Katalysator C2) ein 1,3-Metalldicarbonylate oder ein 1,3-Metalloxodicarbonylate, besonders bevorzugt ein 1,3-Metalldicarbonylate. Im Falle der 1,3-Metalldicarbonylate ist das Metallkation ausgewählt aus der Gruppe der Metallkationen bestehend aus Metallkation mit der Elektronenkonfiguration d⁰ der 3. Nebengruppe und der Lanthanoiden, wie beispielsweise Scandium(III), Yttrium(III), Lanthan(III), Cer(III), Praesodym(III), Neodym(III), Samarium(III), Europium (III), Gadolinium (III), Terbium (III), Dysprosium(III), Holmium(III), Erbium(III), Thulium(III), Ytterbium(III) und Luthetium (III). Im Falle der 1,3-Metalloxodicarbonylate ist das Metallkation ausgewählt aus der Gruppe der Metalloxokationen der 6. Nebengruppe mit der Elektronenkonfiguration d⁰, wie beispielsweise Cr(VI)O₂, Mo(VI)O₂ und W(VI)O₂.

In einer bevorzugten Ausführungsform ist der mindestens eine weitere Katalysator C2) ein neutraler Komplex aus einem Metallkation mit der Elektronenkonfiguration d⁰ der 3. Nebengruppe oder der Lanthanoiden und gleichen oder verschiedenen 1,3-Dicarbonylat-Anionen ist, wobei das Metallkation vorzugsweise ausgewählt ist aus der Gruppe bestehend aus Scandium(III), Yttrium(III), Lanthan(III), Cer(III), Praesodym(III), Neodym(III), Samarium(III), Europium (III), Gadolinium (III), Terbium (III), Dysprosium(III), Holmium(III), Erbium(III), Thulium(III), Ytterbium(III) und Luthetium (III).

Das 1,3-Dicarbonylat-Anion weißt dabei vorzugsweise eine Struktur gemäß Formel (I) auf, 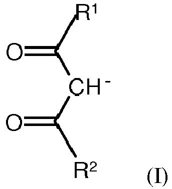 wobei
R¹ und R² für gleiche oder verschiedene Gruppen R³ oder OR³ stehen, wobei
R³ für eine C₁-C₂₀-Alkyl, C₁-C₁₂-Cycloalkyl-, C₁-C₁₂-Aryl, C₁-C₂₀-Alkenyl-, C₁-C₁₂-Aralkyl- oder C₁-C₁₂-Alkylethergruppe steht.

Bevorzugte Reste R₁ und R² sind dabei Methyl, Ethyl, Propyl, Isopropyl, Butyl, sek.-Butyl, Isobutyl, tert.-Butyl, Phenyl, Methoxy, Ethoxy, Propoxy, Isopropoxy, Butoxy, sek.-Butoxy, Isobutoxy, tert.-Butoxy, Benzoxy und Allyloxy. Dabei können R¹ und R² gleich oder verschieden sein.

Als besonders bevorzugte Reste R¹ und R² sind dabei die Reste Methyl, tert.-Butyl, Methoxy und Ethoxy anzusehen, die ebenfalls gleich oder verschieden sein können.

In einer weiteren bevorzugten Ausführungsform ist der mindestens eine weitere Katalysator C2) ein neutraler Komplex aus einem Metallkation mit der Elektronenkonfiguration d⁰ der 3. Nebengruppe oder der Lanthanoiden und gleichen oder verschiedenen 1,3-Dicarbonylat-Anionen ist, wobei das Metallkation vorzugsweise ausgewählt ist aus der Gruppe bestehend aus Scandium(III), Yttrium(III), Lanthan(III), Cer(III), Praesodym(III), Neodym(III), Samarium(III), Europium (III), Gadolinium (III), Terbium (III), Dysprosium(III), Holmium(III), Erbium(III), Thulium(III), Ytterbium(III) und Luthetium (III), und wobei das 1,3-Dicarbonylat-Anion eine Struktur gemäß Formel (I) aufweist, 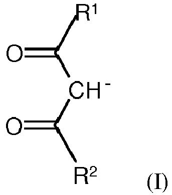 wobei
R¹ und R² für gleiche oder verschiedene Gruppen R³ oder OR³ stehen, wobei
R³ für eine C₁-C₂₀-Alkyl, C₁-C₁₂-Cycloalkyl-, C₁-C₁₂-Aryl, C₁-C₂₀-Alkenyl-, C₁-C₁₂-Aralkyl- oder C₁-C₁₂-Alkylethergruppe steht.

In einer bevorzugten Ausführungsform ist das Metallkation des mindestens einen weiteren Katalysators C2 ausgewählt aus der Gruppe bestehend aus Yttrium(III), Lanthan(III), Ytterbium(III) und Erbium(III), vorzugsweise ausgewählt aus Yttrium(III) oder Erbium(III).

In einer bevorzugten Ausführungsform ist das Metallkation des mindestens einen weiteren Katalysators C2 ausgewählt aus der Gruppe bestehend aus Yttrium(III), Lanthan(III), Ytterbium(III) und Erbium(III), vorzugsweise ausgewählt aus Yttrium(III) oder Erbium(III), und das 1,3-Dicarbonylat-Anion weißt eine Struktur gemäß Formel (I) auf

In einer bevorzugten Ausführungsform ist der mindestens eine weitere Katalysator C2) ausgewählt aus der Gruppe bestehend aus Erbium(III)-2,2,6,6-tetramethyl-3,5-heptandionat, Erbium(III)-acetylacetonat, Yttrium(III)-2,2,6,6-tetramethyl-3,5-heptandionat, Yttrium(III)- acetylacetonat, Ytterbium(III)-2,2,6,6-tetramethyl-3,5-heptandionat, Ytterbium(III)-acetylacetonat, Lanthan(III)-2,2,6,6-tetramethyl-3,5-heptandionat, Lanthan(III)-acetylacetonat und / oder Mischungen aus mindestens zwei hieraus.

In einer bevorzugten Ausführungsform ist der mindestens eine weitere Katalysator C2) ausgewählt aus der Gruppe bestehend aus Erbium(III)-2,2,6,6-tetramethyl-3,5-heptandionat, Yttrium(III)-2,2,6,6-tetramethyl-3,5-heptandionat, Ytterbium(111)-2,2,6,6-tetrainethyl-3,5-heptandionat, Lanthan(III)-2,2,6,6-tetramethyl-3,5-heptandionat und / oder Mischungen aus mindestens zwei hieraus.

In einer bevorzugten Ausführungsform ist der mindestens eine weitere Katalysator C2) ausgewählt aus der Gruppe bestehend aus Erbium(III)-2,2,6,6-tetramethyl-3,5-heptandionat und Yttrium(III)-2,2,6,6-tetramethyl-3,5-heptandionat.

Der mindestens eine Katalysator C1) bzw. eine Mischung aus mehreren Katalysatoren C1) oder eine Mischung aus mindestens einem Katalysator C1 und mindestens einem weiteren Katalysator C2 kann jeweils in fester Form in die erfindungsgemäßen hitzehärtbaren Zweikomponenten-(2K)-Beschichtungsmassen oder in das mindestens ein NCO-Prepolymer A) oder das mindestens eine Polyurethanpolyol B) gegeben und solange verrührt werden, bis Homogenität der Mischung erreicht wird. Alternativ können auch Lösungen des mindestens einen NCO-Prepolymers A) und/oder des mindestens einen Polyurethanpolyols B) in organischem Lösungsmittel verwendet werden. Den erfindungsgemäßen hitzehärtbaren Zweikomponenten-(2K)-Beschichtungsmassen können jeweils 0,01 bis 10 Gew.-% des Katalysators C1) und des Katalysators C2) zugesetzt werden, bezogen auf das Gesamtgewicht der Beschichtungsmassen, entweder als feste Komponente oder in einem organischen Lösungsmittel gelöst. Die Katalysatoren C1) und C2) können in einer Konzentration von 5-50 Gew% in einem organischen Lösungsmittel gelöst werden, bezogen auf das Gesamtgewicht des organischen Lösungsmittels.

Geeignete Lösungsmittel für die Katalysatoren C1) und C2) sind beispielsweise gegenüber Isocyanatgruppen inerte Lösungsmittel wie z.B. Hexan, Toluol, Xylol, Chlorbenzol, Essigsäureethylester, Essigsäure-butylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für die Katalysatoren C1) und C2) zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

### Organische Lösungsmittel D)

Die erfindungsgemäßen hitzehärtbaren Zweikomponenten-(2K)-Beschichtungsmassen können ein organisches Lösungsmittel D) enthalten. Vorzugsweise liegt in den erfindungsgemäßen hitzehärtbaren Zweikomponenten-(2K)-Beschichtungsmassen 0 bis 10 Gew.-% von einem organischen Lösungsmittel D) vor.

Als organische Lösungsmittel D) können dabei alle in der Textilindustrie gängigen Lösemittel verwendet werden, besonders geeignet sind Ester, Alkohole, Ketone, zum Beispiel Butylacetat, Methoxypropylacetat, Methylethylketon oder Gemische aus mindestens zwei dieser Lösemittel. Besonders bevorzugt ist Methoxypropylacetat.

Das organische Lösungsmittel D) kann zusammen mit dem mindestens einen NCO-Prepolymer A), mit dem mindestens einen Polyurethanpolyol B), als Lösungsmittel für die Katalysatoren C1) und / oder C2), aber auch separat vor, während oder nach dem Vermischen von A) und B) zugegeben werden. Bevorzugt wird das organische Lösemittel D) zusammen mit dem mindestens einen NCO-Prepolymer A) und/oder dem mindestens einen NCO-Prepolymer A) in die Zusammensetzung eingebracht. Alternativ wird das Lösemittel bevorzugt nach Vermischen der Komponenten A) und B) zugegeben. Darüber hinaus werden auch kleinere Mengen an Lösungsmittel in die Beschichtungsmasse eingetragen, wenn der Katalysator als Lösung zugesetzt wird.

### Hilfs- und Zusatzstoffe E)

Die erfindungsgemäßen hitzehärtbaren Zweikomponenten-(2K)-Beschichtungsmassen können Hilfs- und Zusatzstoffe E) enthalten. Vorzugsweise liegt in den erfindungsgemäßen hitzehärtbaren Zweikomponenten-(2K)-Beschichtungsmassen 0 bis 20 Gew.-%, besonders bevorzugt 0 bis 15 Gew.-%, noch bevorzugter 0,01 % bis 10 Gew.-% von Hilfs- und Zusatzstoffe E) vor, bezogen auf das Gesamtgewicht der Beschichtungszusammensetzung.

Geeignete Hilfs- und Zusatzstoffe E) sind beispielsweise Pigmente, UV-Stabilisatoren, Antioxidantien, Füllstoffe, Treibmittel, Mattierungsmittel, Griffhilfsmittel, Schaumverhinderer, Lichtschutzmittel, Weichmacher und/oder Verlaufshilfsmittel umfassen.

### Weitere Merkmale der erfindungsgemäßen hitzehärtbaren Zweikomponenten-(2K)-Beschichtungsmassen

In einer bevorzugten Ausführungsform umfassen die erfindungsgemäßen hitzehärtbaren Zweikomponenten-(2K)-Beschichtungsmassen kein Wasser.

In einer bevorzugten Ausführungsform der erfindungsgemäßen hitzehärtbaren Zweikomponenten-(2K)-Beschichtungsmassen weist die NCO-Komponente b) eine mittlere NCO-Funktionalität in einem Bereich von 1,5 bis 4,0, bevorzugt in einem Bereich von 1,8 bis 3,8 oder bevorzugt in einem Bereich von 2,0 bis 3,5 auf.

Das Verhältnis des mindestens einen NCO-Prepolymers A) zum mindestens einen Polyurethanpolyol B) ist bevorzugt so gewählt, dass die freien Isocyanatgruppen des mindestens einen NCO-Prepolymers A) zu den Hydroxylgruppen des mindestens einen Polyurethanpolyols B) in einem Äquivalentverhältnis von 0,9 bis 1,3, bevorzugt von 1,0 bis 1,2 und besonders bevorzugt von 1,0 bis 1,1 vorliegen.

Ebenfalls Gegenstand der vorliegenden Erfindung ist ein Verfahren zur Herstellung der erfindungsgemäßen Zweikomponenten-(2K)-Beschichtungsmassen, wobei die Komponenten A), B), C1), gegebenenfalls C2), gegebenenfalls D) und gegebenenfalls E) direkt miteinander vermischt werden.

Die erfindungsgemäßen hitzehärtbaren Zweikomponenten-(2K)-Beschichtungsmassen werden bevorzugt durch Vermischen aller Komponenten bei 20 bis 30 °C für 20 bis 50 min hergestellt. Vorteilhaft werden insbesondere die Komponenten A) und B) zunächst getrennt gelagert und erst möglichst kurz vor der Auftragung bzw. Verarbeitung der erfindungsgemäßen hitzehärtbaren Zweikomponenten-(2K)-Beschichtungsmassen vermischt.

Die erfindungsgemäßen hitzehärtbaren Zweikomponenten-(2K)-Beschichtungsmassen weisen direkt nach dem Vermischen der Komponenten bevorzugt eine Viskosität auf, die es noch ermöglicht, die erfindungsgemäßen hitzehärtbaren Zweikomponenten-(2K)-Beschichtungsmassen nach den gängigen in der Textilindustrie angewendeten Methoden zu verarbeiten, insbesondere durch Rakelauftrag. Die Viskosität der erfindungsgemäßen hitzehärtbaren Zweikomponenten-(2K)-Beschichtungsmassen kann dabei auch von Hilfs-und Zusatzstoffen E), wie beispielsweise den oben genannten, beeinflusst sein.

Die erfindungsgemäßen hitzehärtbaren Zweikomponenten-(2K)-Beschichtungsmassen ist vorzugsweise noch mindestens 4 h nach dem Vermischen verarbeitbar.

Ein weiterer Gegenstand der Erfindung ist ein Verfahren zur Beschichtung von Substraten, wobei die erfindungsgemäßen hitzehärtbaren Zweikomponenten-(2K)-Beschichtungsmassen auf ein Substrat aufgetragen und bei einer Temperatur in einem Bereich von 90 °C bis 200 °C, bevorzugt in einem Bereich von 90 °C bis 180°C, oder bevorzugt in einem Bereich von 90 °C bis 170°C vernetzt wird. Die Vernetzung erfolgt dabei durch Reaktion der NCO-Komponente A) mit der OH-Komponente B) miteinander. Die Katalysatoren C1) und C2) beschleunigen diese Reaktion soweit, dass der Film innerhalb weniger Minuten klebfrei ausgehärtet werden kann.

Ein weiterer Gegenstand der Erfindung ist ein Verfahren zur Direkt- und Umkehrbeschichtung von Substraten mittels hitzehärtbarer Beschichtungssysteme als Deck-, Haft-, Zwischen-, oder Schaumstrich, wobei die erfindungsgemäßen hitzehärtbaren Zweikomponenten-(2K)-Beschichtungsmassen eingesetzt werden.

Besonders bevorzugt erfolgt die Vernetzung unter Verwendung von Temperaturprofilen bei welchen im Laufe der Vernetzungszeit die Temperatur stufenweise im angegebenen Temperaturbereich erhöht wird.

Die Vernetzungszeit unter Temperatureinwirkung beträgt insgesamt bevorzugt von 1 min bis 15 min, besonders bevorzugt von 2 min bis 10 min und ganz besonders bevorzugt von 2 min bis 5 min.

Die erfindungsgemäßen hitzehärtbaren Zweikomponenten-(2K)-Beschichtungsmassen können in den erfindungsgemäßen Verfahren in einer oder mehreren Schichten auf das Substrat aufgetragen werden.

Die erfindungsgemäßen hitzehärtbaren Zweikomponenten-(2K)-Beschichtungsmassen können mit den üblichen Auftragungs- bzw. Beschichtungseinrichtungen, beispielsweise einem Rakel, z. B. einem Streichrakel, Walzen oder anderen Geräten auf das Substrat aufgetragen werden. Auch Drucken, Sprühen ist möglich. Bevorzugt erfolgt die Auftragung durch Rakeln. Die Auftragung kann ein- oder beidseitig erfolgen. Der Auftrag kann direkt oder über eine Transferbeschichtung, bevorzugt über Transferbeschichtung erfolgen.

Bevorzugt werden bei den erfindungsgemäßen Verfahren Mengen von 100 bis 1000 g/m² auf das Substrat aufgetragen.

Als Substrate eignen sich bevorzugt textile Materialien, Flächensubstrate aus Metall, Glas, Keramik, Beton, Naturstein, Leder, Naturfasern, und Kunststoffen wie PVC, Polyolefine, Polyurethan oder ähnliches. Auch dreidimensionale Gebilde eigenen sich als Trägermaterialien. Besonders bevorzugt handelt es sich bei dem Substrat um ein textiles Material oder Leder, ganz besonders bevorzugt um ein textiles Material.

In einer bevorzugten Ausgestaltung der erfindungsgemäßen Verfahren, ist das Substrat ein textiles Material.

In einer weiteren bevorzugten Ausführungsform der erfindungsgemäßen Verfahren sind die Substrate textile Materialien oder Leder.

Unter textilen Materialien im Sinne der vorliegenden Erfindung sind beispielsweise Gewebe, Gewirke, gebundene und ungebundene Vliese zu verstehen. Die textilen Materialien können aus synthetischen, natürlichen Fasern und/oder deren Mischungen aufgebaut sein. Grundsätzlich sind Textilien aus beliebigen Fasern für die erfindungsgemäßen Verfahren geeignet. Durch die erfindungsgemäßen hitzehärtbaren Zweikomponenten-(2K)-Beschichtungsmassen können die Substrate in allen üblichen Arten behandelt bzw. veredelt werden, vorzugsweise durch Beschichten oder Verkleben der Fasern untereinander bzw. von Substraten miteinander.

Die beschichteten textilen Substrate können vor, während oder nach der Applikation der erfindungsgemäßen hitzehärtbaren Zweikomponenten-(2K)-Beschichtungsmassen oberflächenbehandelt werden, z. B. durch Vorbeschichten, Schleifen, Velourisieren, Rauhen und/oder Tumblen.

In der Textilbeschichtung wird häufig ein Mehrschichtaufbau angewendet. Die Beschichtung besteht dann bevorzugt aus mindestens zwei Schichten, die man im Allgemeinen auch als Striche bezeichnet. Die oberste, der Luft zugewandte Schicht wird dabei als Deckstrich bezeichnet. Die unterste, dem Substrat zugewandte Seite, welche den Deckstrich oder weitere Schichten des Mehrschichtaufbaus mit dem Textil verbindet, wird auch als Haftstrich bezeichnet. Dazwischen können eine oder mehrere Schichten aufgebracht werden, welche im Allgemeinen als Zwischenstriche bezeichnet werden.

Durch die erfindungsgemäßen Verfahren können sich in Verbindung mit textilen Materialien Deckstriche, Zwischenstriche und auch Haftstriche hergestellt werden. Ganz besonders geeignet ist das Verfahren zur Herstellung von Zwischenstrichen. Die Zwischenstriche können dabei in kompakter oder geschäumter Form sein. Zur Herstellung geschäumter Zwischenstriche können Treibmittel zum Einsatz kommen. Dafür geeignete Treibmittel sind aus dem Stand der Technik bekannt.

Besonders vorteilhaft an den erfindungsgemäßen hitzehärtbaren Zweikomponenten-(2K)-Beschichtungsmassen ist insbesondere auch, dass mit diesen dicke Schichten mit nur einem oder sehr wenigen Strichen hergestellt werden können.

Ebenfalls Gegenstand der Erfindung ist ein beschichtetes Substrat erhältlich nach dem erfindungsgemäßen Verfahren.

Ebenfalls Gegenstand der Erfindung sind Verbundstrukturen, enthaltend gehärtete die erfindungsgemäßen hitzehärtbaren Zweikomponenten-(2K)-Beschichtungsmassen und mindestens ein Substrat.

In einer bevorzugten Ausführungsform der erfindungsgemäßen Verbundstrukturen, sind die Substrate textile Materialien oder Leder.

Aufgrund der hervorragenden anwendungstechnischen Eigenschaften eignen sich die erfindungsgemäßen hitzehärtbaren Zweikomponenten-(2K)-Beschichtungsmassen bzw. die aus ihnen erzeugten Schichten oder Verklebungen bevorzugt zur Beschichtung bzw. Herstellung von Substraten ausgewählt aus der Gruppe bestehend aus Oberbekleidung, Kunstlederartikeln, wie Schuhen, Möbelbezugsmaterialien, Automobil-Innenausstattungsmaterialien und Sportartikel oder Kombinationen aus mindestens zwei hiervon. Diese Aufzählung ist lediglich beispielhaft und nicht etwa limitierend zu verstehen.

Ebenfalls Gegenstand der Erfindung ist die Verwendung der erfindungsgemäßen hitzehärtbaren Zweikomponenten-(2K)-Beschichtungsmassen zur Herstellung von elastischen Beschichtungen oder elastischen Filmen auf Substraten.

In einer bevorzugten Ausführungsform der erfindungsgemäßen Verwendung, sind die Substrate textile Materialien oder Leder.

Elastische Filme und Beschichtungen im Sinne dieser Erfindung weisen bevorzugt eine Bruchdehnung von ≥ 200% und/oder eine Bruchspannung von ≥ 2 MPa und einen 100% Modul von ≥ 0,2 MPa auf.

Die genannten physikalischen Eigenschaften werden dabei wie im Methodenteil ausgeführt bestimmt.

Zur näheren Erläuterung der Erfindung dienen die nachfolgenden Beispiele, wobei diese lediglich Anschauungsbeispiele für bestimmte Ausführungsformen darstellen, nicht jedoch eine Beschränkung des Umfangs der Erfindung.

### Experimenteller Teil:

### Methoden:

### Alle Prozentangaben beziehen sich, soweit nicht anders angegeben, auf das Gewicht (Gew.-%).

Die Bestimmung der NCO-Gehalte erfolgte titrimetrisch nach DIN EN ISO 11909 (Ausgabedatum 1.05.2007).

Der Gehalt an OH-Gruppen gibt den Massenanteil an OH-Gruppen an der Gesamtmasse des betrachteten Polymers an. Bei den erfindungsgemäßen OH-Komponenten B) kann der Gehalt an OH-Gruppen in Äquivalenten aus der Formulierung des Reaktionsgemisches errechnet werden. Mit dem Äquivalentgewicht von 17 g/Äquivalent für OH und dem Gesamtgewicht des Polymers kann der Gehalt an OH-Gruppen berechnet werden.

Sämtliche Viskositätsmessungen erfolgten mit einem Physica MCR 51 Rheometer der Fa. Anton Paar GmbH (DE) nach DIN EN ISO 3219 (Ausgabedatum 1.10. 1994).

Die Messungen der 100%-Module, der Bruchspannung und der Bruchdehnung erfolgten nach DIN 53504 (Ausgabedatum 1.3.2017).

Das zahlenmittlere Molekulargewicht Mₙ wurde bestimmt durch Gelpermeationschromatographie (GPC) in Tetrahydrofuran bei 23°C. Es wurde dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5 µm; RID-Detektor). Dabei wurden Polystyrolproben bekannter Molmasse zur Kalibrierung verwendet. Die Berechnung des zahlenmittleren Molekulargewichts erfolgte softwaregestützt. Basislinienpunkte und Auswertegrenzen wurden entsprechend der DIN 55672 Teil 1 (Ausgabedatum 1. 3. 2016) festgelegt.

### Beschreibung der Rohmaterialien:

**Polyol 1:** Polytetrahydrofuran 250 (PolyTHF 250), Polyether mit zahlenmittlerem Molgewicht Mₙ = 250 g/mol, BASF SE, Deutschland
**Polyol 2:** Polytetrahydrofuran 1000 (PolyTHF 1000), Polyether mit zahlenmittlerem Molgewicht Mₙ = 1000 g/mol,
   BASF SE, Deutschland
**Polyisocyanat 1:** Isophorondiisocyanat (IPDI) (Covestro AG, Deutschland)
**Polyisocyanat 2:** 4,4'-Methylen-bis-(phenylisocyanat), reines 4,4'-Isomer (MDI) (Covestro AG, Deutschland)
**Trimethylolpropan:** Sigma Aldrich, Deutschland
**1,4-Diazabicyclo[2.2.2]octan (DABCO):** Sigma Aldrich, Deutschland
**1-Methoxy-2-propylacetat (MPA) wasserfrei:** Azelis Deutschland GmbH
**Dibutylzinndilaurat:** Sigma Aldrich, Deutlschland
**Vulkanox BHT:** Sigma Aldrich, Deutschland
**Triphenylphosphin:** Sigma Aldrich, Deutschland

Die folgenden beschriebenen Komplexe der Seltenen Erden wurden von der Firma Sigma Aldrich, Deutschland, bezogen:
**Terbium(III)-2,2,6,6-tetramethyl-3,5-heptandionat** (CAS-Nr. 15492-51-0)
**Yttrium(III)-2,2,6,6-tetramethyl-3,5-heptandionat** (CAS-Nr. 15632-39-0)
**Erbium(III)-2,2,6,6-tetramethyl-3,5-heptandionat** (CAS-Nr. 35733-23-4)
**Gadolinium(III)-acetylacetonat Hydrat** (CAS-Nr. 64438-54-6)
**Praesodym(III)-acetylacetonat Hydrat** (CAS-Nr. 28105-87-5)
**Yttrium(III)-acetylacetonat Hydrat** (CAS-Nr. 207801-29-4))

Der folgende Terbiumkomplex wurde von Alfa Aesar, Deutschland, bezogen:
**Terbium(III)-2,4-pentandionat** (CAS-Nr. 14284-95-8)

Als Trennpapier wurde für die Laborversuche das polymerbeschichtete Papier Y05200 der Firma Felix Schoeller, Deutschland, verwendet.

### Beispiel 1: Synthesevorschrift für die Herstellung vom NCO-Prepolymer 1 (ohne Dünschichtdestillation)

780 g PolyTHF 1000 wurde bei einem Druck von 10 mbar 1 h bei 100 °C gerührt, um überschüssiges Wasser aus der Mischung zu entfernen. Das Material wurde daraufhin auf 60 °C abgekühlt und 60 g Trimethylolpropan hinzugegeben. Die Mischung wurde durch 15 min Rühren bei 60 °C homogenisiert. Die Mischung wurde auf 50 °C eingestellt, bei dieser Temperatur wurden 780 g Isophorondiisocyanat innerhalb von 5 Minuten zugegeben. Nach Ende der Exothermie wurde auf 75 °C aufgeheizt und 0,8 g DABCO als Katalysator hinzugeben. Es wurde bei dieser Temperatur nachgerührt, bis der theoretische NCO-Gehalt von 10,2 Gew% erhalten wurde. Das erhaltende NCO-Prepolymer 1 besitzt eine Viskosität von 55200 mPas bei 23 °C und ein zahlenmittleres Molekulargewicht von 1209 g/mol.

### Beispiel 2: Synthesevorschrift für die Herstellung vom NCO-Prepolymer 2 (mit Dünnschichtdestillation)

1170 g PolyTHF 1000 wurde bei einem Druck von 20 mbar 1 h bei 100 °C gerührt, um überschüssiges Wasser aus der Mischung zu entfernen. Das Material wurde daraufhin auf 60 °C abgekühlt, dann wurden 90 g Trimethylolpropan zugegeben. Die Mischung wurde bei 60 °C durch Rühren für 15 min homogenisiert. Die Polyolmischung wurde auf 28 °C gestellt, und bei dieser Temperatur innerhalb von 60 min 3873 g IPDI und dann 0,3 g Dibutylzinndilaurat als Katalysator zugegeben. Man ließ die Reaktion 75 min rühren, in dieser Zeit stieg die Temperatur auf 50 °C. Nach Abklingen der Exothermie wurde 4 h 15 min bei 65 °C nachgerührt. Der NCO-Gehalt der erhaltenen Reaktionsmischung lag bei 25,1 Gew%.

Der Ansatz wurde durch Dünnschichtdestillation im Vakuum von monomerem Isophorondiisocyanat befreit. Destilliert wurde bei einer Temperatur von 160 °C und einem Druck von 0,05 mbar. Das erhaltende Prepolymer 2 weißt einen freien NCO-Gehalt von 7,5 Gew%, eine Viskosität von 55800 mPas und ein zahlenmittleres Molekulargewicht von 1562 g/mol auf.

### Beispiel 3: Synthesevorschrift für die OH-Komponente 1

Eine Mischung aus 1500 g PolyTHF 1000 und 375 g Polytetrahydrofuran 250 wurde bei einem Druck von 10 mbar 1 h bei 100 °C gerührt, um überschüssiges Wasser aus der Mischung zu entfernen. Man gab je 1 g Vulkanox BHT und Triphenylphosphin zur Mischung, stellte auf 60 °C ein und gab innerhalb von 5 min 225 g MDI zu. Danach wurden noch 110 g MPA zur Verringerung der Viskosität zugegeben. Man rührte 70 min bei 60 °C, bis der NCO-Gehalt auf einen nicht mehr titrierbaren Gehalt (< 0.1 Gew %) gefallen war.

Man erhielt ein Produkt mit einer Viskosität von 3160 mPas bei 23 °C mit einem zahlenmittlerem Molekulargewicht von 1754 g/mol. Der rechnerische Gehalt an freien OH-Gruppen beträgt 3,2 Gew%.

### Beispiel 4: Herstellung von Filmen mit einem NCO/OH-Verhältnis von 1:1

10 Gew%ige Katalysatorlösungen wurden hergestellt, indem man bei Umgebungstemperatur (ca. 20-25 °C) 10 Gewichtsteile der Komplexe der Seltenen Erden in 90 Gewichtsteile MPA einträgt. Man erhielt zunächst eine Dispersion des festen Komplexes im Lösungsmittel. Nach 24 Stunden Stehen des geschlossenen Gefäßes bei Umgebungstemperatur erhielt man eine klare Lösung, die für die folgende Versuchsdurchführung verwendet wurde. 20 g des NCO- Prepolymers 1 (0,048 Äqivalente NCO), 25,3 g der OH-Komponente 1 (0,048 Äquivalente OH) und 0,45 g einer 10%igen Katalysatorlösung in MPA wurden bei Raumtemperatur innerhalb 1 Minute homogen verrührt. Es wurde eine Nassfilmschicht von 500 µm auf Trennpapier gerakelt.

Die Nassfilmschicht wurde im Umluftofen unter folgenden Bedingungen getrocknet:
Die frisch gerakelte Beschichtung wurde in einen auf 90 °C vorgeheizten Umluftofen gelegt. Der Temperaturregler des Ofens wurde sofort auf 150 °C eingestellt, so dass sich die Temperatur innerhalb von 10 Minuten auf 150 °C aufheizt. Nach Erreichen einer Temperatur von 150 °C wurde die Beschichtung weitere 5 Minuten bei dieser Temperatur im Trockenschrank gelagert. Die Beschichtungen wurden dann mindestens drei Tage bei Umgebungstemperatur gelagert, bevor Module und Bruchdehnung bestimmt wurden.

**Tabelle 1: Filmwerte bei einem NCO/OH-Verhältnis von 1:1 mit verschiedenen Katalysatoren**

| Katalysator | 100% Modul (MPa) | Bruchspannung (MPa) | Bruchdehnung (%) |
|---|---|---|---|
| Terbium(III)-2,2,6,6-tetramethyl-3,5-heptandionat | 1,35 | 12,7 | 625 |
| Yttrium(III)-2,2,6,6-tetramethyl-3,5-heptandionat | 1,07 | 6,4 | 624 |
| Erbium(III)-2,2,6,6-tetramethyl-3,5-heptandionat | 0,78 | 5,0 | 771 |

Die Ergebnisse zeigen, dass die Verwendung des Terbiumkomplexes als Katalysator zu einem Polymer führt, dass eine wesentlich höhere Bruchspannung aufweist, als Polymere die unter Verwendung der beiden anderen Komplexe hergestellt wurden.

### Beispiel 5: Herstellung von Filmen mit einem NCO/OH-Verhältnis von 1,05 : 1

37,8 g des NCO-haltigen Prepolymers 1 (0,09 Äquivalente NCO), 45,2 g der OH-Komponente 3 (0,085 Äquivalente OH) und 0,45 g einer 10%igen Katalysatorlösung in MPA wurden bei Raumtemperatur innerhalb 1 Minute homogen verrührt. Es wurde eine Nassfilmschicht von 500 µm auf Trennpapier gerakelt.

Die Nassfilmschicht wurde im Umluftofen unter folgenden Bedingungen getrocknet: Die frisch gerakelte Beschichtung wurde in einen auf 90 °C vorgeheizten Umluftofen gelegt. Der Temperaturregler des Ofens wurde sofort auf 150 °C eingestellt, so dass sich die Temperatur innerhalb von 10 Minuten auf 150 °C aufheizt. Nach Erreichen einer Temperatur von 150 °C wurde die Beschichtung weitere 5 Minuten bei dieser Temperatur im Trockenschrank gelagert. Die Beschichtungen wurden dann mindestens drei Tage bei Umgebungstemperatur gelagert, bevor Module und Bruchdehnung bestimmt wurden.

**Tabelle 2: Filmwerte bei einem NCO/OH-Verhältnis von 1,05:1**

| Katalysator | 100 % Modul (MPa) | Bruchspannung (MPa) | Bruchdehnung (%) |
|---|---|---|---|
| Terbium(III)-2,2,6,6-tetramethyl-3,5-heptandionat | 1,41 | 13,5 | 537 |
| Yttrium(III)-2,2,6,6-tetramethyl-3,5-heptandionat | 1,20 | 7,0 | 452 |

Die Ergebnisse zeigen, dass die Verwendung des Terbiumkomplexes als Katalysator zu einem Polymer führt, dass eine wesentlich höhere Bruchspannung aufweist, als ein Polymer welches unter Verwendung desYttriumkomplexes hergestellt wurde.

### Beispiel 6: Film aus NCO-Komponente des Beispiels 1 und der OH-Komponente des Beispiels 3 mit wasserfreiem Terbium(III)-2,4-pentandionat als Katalysator mit einem NCO/OH-Verhältnis von 1,05:1

Eine 10 Gew%ige Katalysatorlösung wurde hergestellt, indem man bei Umgebungstemperatur (ca. 20-25 °C) 10 Gewichtsteile des Terbium(III)-2,4-pentandionatkomplexes in 90 Gewichtsteile DMSO einträgt. Nach wenigen Minuten erhielt man eine klare Lösung, die für die folgende Versuchsdurchführung verwendet wurde.

30,0 g des NCO-haltigen Prepolymers 1 (0,0714 Äquivalente NCO), 36,0 g der OH-Komponente 3 (0,0678 Äquivalente OH) und 0,65 g einer 10%igen Katalysatorlösung in DMSO wurden bei Raumtemperatur innerhalb 1 Minute homogen verrührt.
Es wurde eine Nassfilmschicht von 500 µm auf Trennpapier gerakelt.

Die Nassfilmschicht wurde im Umluftofen unter folgenden Bedingungen getrocknet:
Die frisch gerakelte Beschichtung wurde in einen auf 90 °C vorgeheizten Umluftofen gelegt. Der Temperaturregler des Ofens wurde sofort auf 150 °C eingestellt, so dass sich die Temperatur innerhalb von 10 Minuten auf 150 °C aufheizt. Nach Erreichen einer Temperatur von 150 °C wurde die Beschichtung weitere 5 Minuten bei dieser Temperatur im Trockenschrank gelagert. Die Beschichtungen wurden dann mindestens drei Tage bei Umgebungstemperatur gelagert, bevor Module und Bruchdehnung bestimmt wurden.

**Tabelle 3: Filmwerte für den Katalysator Terbium(III)-2,4-pentandionat bei einem NCO/OH-Verhältnis von 1,05:1**

| Katalysator | 100 % Modul (MPa) | Bruchspannung (MPa) | Bruchdehnung (%) |
|---|---|---|---|
| Terbium(III)-2,4-pentanedionat | 2,12 | 7,22 | 755 |

### Beispiel 7: Film aus der NCO-Komponente des Beispiels 2 und der OH-Komponente des Beispiels 3 (1,05 : 1)

31,6 g des NCO-haltigen Prepolymers 2 (0,057 Äqivalente NCO), 28,5 g OH-Komponente (0,054 Äquivalente OH) und 0,45 g einer 10%igen Katalysatorlösung in MPA wurden bei Raumtemperatur innerhalb 1 Minute homogen verrührt. Es wird eine Nassfilmschicht von 500 µm auf Trennpapier gerakelt.

Der Film wurde mit folgenden Parametern im Umluftofen getrocknet:
Die frisch gerakelte Beschichtung wurde in einen auf 90 °C vorgeheizten Umluftofen gelegt. Der Temperaturregler des Ofens wurde sofort auf 150 °C eingestellt, so dass sich die Temperatur innerhalb von 10 Minuten auf 150 °C aufheizt. Nach Erreichen einer Temperatur von 150 °C wurde die Beschichtung weitere 5 Minuten bei dieser Temperatur im Trockenschrank gelagert. Die Beschichtungen wurden dann mindestens drei Tage bei Umgebungstemperatur gelagert, bevor Module und Bruchdehnung bestimmt wurden.

**Tabelle 4: Filmwerte für die Formulierung mit einem monomerenarmen Polyisocyanat**

| Katalysator | 100 % Modul (MPa) | Bruchspannung (MPa) | Bruchdehnung (%) |
|---|---|---|---|
| Terbium(III)-2,2,6,6-tetramethyl-3,5-heptandionat | 2,57 | 8,7 | 536 |

### Beispiel 8: Herstellung von Filmen mit Katalysatormischungen der Komplexe der Seltenen Erden

25,0 g des NCO-haltigen Prepolymers 1 (0,060 Äquivalente NCO), 30,3 g der OH-Komponente 1 (0,0571 Äquivalente OH), verschiedene Mengen einer 10 Gew%igen Terbiumtetramethylheptandionatlösung in MPA sowie zusätzlich 10 Gew%ige Lösungen von Yttriumtetramethylheptandionat in MPA oder Erbiumtetramethylheptandionat in MPA werden innerhalb 1 Minute homogen verrührt.
Es wird eine Nassfilmschicht von 500 µm auf Trennpapier gerakelt.

Die frisch gerakelte Beschichtung wurde in einen auf 90 °C vorgeheizten Umluftofen gelegt. Der Temperaturregler des Ofens wurde sofort auf 150 °C eingestellt, so dass sich die Temperatur innerhalb von 10 Minuten auf 150 °C aufheizt. Nach Erreichen einer Temperatur von 150 °C wurde die Beschichtung weitere 5 Minuten bei dieser Temperatur im Trockenschrank gelagert. Die Beschichtungen wurden dann mindestens drei Tage bei Umgebungstemperatur gelagert, bevor Module und Bruchdehnung bestimmt wurden.

**Tabelle 5: Filmwerte für Katalysatormischungen**

| Terbiumkomplexlösung (g) | Yttriumkomplexlösung (g) | Erbiumkomplexlösung (g) | 100 % Modul (MPa) | Bruchspannung (MPa) | Bruchdehnung (%) |
|---|---|---|---|---|---|
| 0,42 | 0,13 | - | 1,79 | 7,19 | 535 |
| 0,28 | 0,28 | - | 1,82 | 7,70 | 598 |
| 0,13 | 0,42 | - | 1,68 | 6,51 | 626 |
| 0,42 | - | 0,13 | 1,67 | 7,15 | 563 |
| 0,13 | - | 0,42 | 1,69 | 6,70 | 568 |
| 0,05 | - | 0,50 | 1,99 | 6,63 | 535 |

### Beispiel 9: Versuch auf Beschichtungsanlage

75,6 g des NCO-haltigen Prepolymers des Beispiels 1 (0,183 Äqivalente NCO), 90,4 g des Beispiels 3 (0,172 Äquivalente OH), 0,8 g Acronal 700 L, 0,8 g BYK-L 9565 und jeweils eine der in der nachfolgenden Tabelle genannten 10%igen Katalysatorlösungen in MPA wurden bei Raumtemperatur innerhalb 1 Minute homogen verrührt. Auf einer Beschichtungsanlage wurden auf Trennpapier Filme aufgezogen und getrocknet.

Diese beiden Versuche wurden auf einer Pilotanlage IMP-LABO der Isotex SPA (Sandrigo, Italien) erstellt. Diese Isotex-Anlage ist ein Umbau einer Standard-Transferpapieranlage, wie man sie in den verarbeitenden Firmen der Textilindustrie vorfinden kann. Übliche Produktionsanlagen enthalten 3 Walzenrakelstreichköpfe oder mehr. Diese Pilotanlage verfügt nur über einen Walzenrakelstreichkopf. Die Arbeitsbreite üblicher Produktionsanlagen beträgt mindestens 1,50 m. Diese Anlage verfügt über nur einen Walzenrakelstreichkopf, bei dem der Abstand vom Rakel/Auftragsmesser zur Gegendruckwalze manuell eingestellt wird. Die Arbeitsbreite beträgt maximal 50 cm und kann flexibel eingestellt werden. Die Anlage kann nicht zur kontinuierlichen Herstellung von Kunstleder verwendet werden, da nur ein Walzenrakelstreichkopf verfügbar ist. Im unten beschriebenen Versuch wurde die erfinderische Formulierung direkt auf Transferpapier aufgerakelt und durch die drei Thermokanäle dieser Pilotanlage gezogen. Diese drei Thermokanäle sind je 100 cm lang. Die Thermokanäle können separat temperiert werden, und auch die Zu- und Abluft kann separat gesteuert werden. Des Weiteren kann die Abluft auch in dem Thermokanal individuell gesteuert werden. Bei den hier beschriebenen Versuchen wurde 40% Abluft von oben abgesaugt und 60% von unten.

Alle Versuche wurden unter dem gleichen Temperaturprofil und mit gleicher Vorzugsgeschwindigkeit gefahren:
Abstand 0,25 mm
Arbeitsbreite 40 cm
Erste Kammer 75 °C
Zweite Kammer 95 °C
Dritte Kammer 150 °C
Vorzugsgeschwindigkeit 0,4 m/min.

Die beschriebenen Versuche wurden auf einem Trennpapier WR2 der Firma Favini Srl (Crusinallo, Italien) gefahren. Die hergestellte Formulierung aus der Isocyanatkomponente, der Polyolkomponente und jeweils einer der genannten Katalysatorlösungen wurden auf der Breite des Papiers vor dem Rakelmesser auf das Trennpapier aufgetragen und mit den genannten Maschinenparametern durch die drei Thermokanäle gezogen. Die auf dem Papier ausgehärteten Beschichtungen wurden weitere drei Tage bei normalen Umgebungsbedingungen im Labor gelagert. Nach Trennen vom Papier wurden von den freistehenden Filmen Zugprüfungen nach DIN 53504 durchgeführt. Die erhaltenen Werte sind in der nachfolgenden Tabelle aufgeführt.

**Tabelle 6: Filmwerte von Versuchen auf einer Technikums-Beschichtungsanlage**

| Katalysator | 100 % Modul (MPa) | Bruchspannung (MPa) | Bruchdehnung (%) |
|---|---|---|---|
| 3,4 g Terbium(III)-2,2,6,6-tetramethyl-3,5-heptandionatlösung (10%ig in MPA) | 1,29 | 11,8 | 648 |
| 1,7 g Yttrium(III)-2,2,6,6-tetramethyl-3,5-heptandionatlösung (10%ig in MPA) | 1,27 | 9,45 | 603 |

## Patentansprüche

1. Hitzehärtbare Zweikomponenten-(2K)-Beschichtungsmassen enthaltend
A) mindestens ein NCO-Prepolymer,
B) mindestens ein Polyurethanpolyol,
C1) mindestens ein neutraler Terbium(III)-1,3-Dicarbonylat-Komplex als Katalysator, und gegebenenfalls
C2) mindestens einen weiteren von C1) unterschiedlichen Katalysator.

2. Hitzehärtbare Zweikomponenten-(2K)-Beschichtungsmassen gemäß Anspruch 1 enthaltend
A) 10 bis 70 Gew.-% von mindestens einem NCO-Prepolymer,
B) 10 bis 70 Gew.-% von mindestens einem Polyurethanpolyol,
Cl) 0,01 bis 10 Gew.-% von mindestens ein neutraler Terbium(III)-1,3-Dicarbonylat-Komplex als Katalysator,
C2) 0 bis 10 Gew.-% von einem weiteren von C1) unterschiedlichen Katalysator,
D) 0 bis 10 Gew.-% von einem organischen Lösungsmittel,
E) 0 bis 20 Gew.-% von Hilfs- und Zusatzstoffen,
bezogen auf die Gesamtmasse der Beschichtungsmassen, mit der Maßgabe das die Summe von A), B), C1), C2), D) und E) 100 nicht überschreitet.

3. Hitzehärtbare Zweikomponenten-(2K)-Beschichtungsmassen nach einem der vorherigen Ansprüche, **dadurch gekennzeichnet, dass** die Beschichtungsmassen zu 95%, vorzugsweise zu 98%, besonders bevorzugt zu 99% und noch bevorzugter zu 100% aus den Komponenten A), B), C1), C2), D) und E) bestehen.

4. Hitzehärtbare Zweikomponenten-(2K)-Beschichtungsmassen nach einem der vorherigen Ansprüche, **dadurch gekennzeichnet, dass** der mindestens eine neutrale Terbium(III)-1,3-Dicarbonylat-Komplex Terbium(III)-2,2,6,6-tetramethyl-3,5-heptandionat (Tb(dpm)₃) oder Terbium(III)-2,4-pentandionat (Tb(acac)₃) ist, vorzugsweise Terbium(III)-2,2,6,6-tetramethyl-3,5-heptandionat ist

5. Hitzehärtbare Zweikomponenten-(2K)-Beschichtungsmassen nach einem der vorherigen Ansprüche, **dadurch gekennzeichnet, dass** der mindestens eine weitere Katalysator C2) ein neutraler Komplex aus einem Metallkation mit der Elektronenkonfiguration d⁰ der 3. Nebengruppe oder der Lanthanoiden und gleichen oder verschiedenen 1,3-Dicarbonylat-Anionen ist, wobei das Metallkation vorzugsweise ausgewählt ist aus der Gruppe bestehend aus Scandium(III), Yttrium(III), Lanthan(III), Cer(III), Praesodym(III), Neodym(III), Samarium(III), Europium (III), Gadolinium (III), Terbium (III), Dysprosium(III), Holmium(III), Erbium(III), Thulium(III), Ytterbium(III) und Luthetium (III).

6. Hitzehärtbare Zweikomponenten-(2K)-Beschichtungsmassen gemäß Anspruch 5, **dadurch gekennzeichnet, dass** das 1,3-Dicarbonylat-Anion eine Struktur gemäß Formel (I) aufweist, 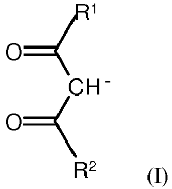 wobei
R¹ und R² für gleiche oder verschiedene Gruppen R³ oder OR³ stehen, wobei
R³ für eine C₁-C₂₀-Alkyl, C₁-C₁₂-Cycloalkyl-, C₁-C₁₂-Aryl, C₁-C₂₀-Alkenyl-, C₁-C₁₂-Aralkyl- oder C₁-C₁₂-Alkylethergruppe steht.

7. Hitzehärtbare Zweikomponenten-(2K)-Beschichtungsmassen nach einem der vorherigen Ansprüche, **dadurch gekennzeichnet, dass** der mindestens eine weitere Katalysator C2) ausgewählt ist aus der Gruppe bestehend aus Erbium(III)-2,2,6,6-tetramethyl-3,5-heptandionat, Yttrium(III)-2,2,6,6-tetramethyl-3,5-heptandionat, Ytterbium(III)-2,2,6,6-tetramethyl-3,5-heptandionat, Lanthan(III)-2,2,6,6-tetramethyl-3,5-heptandionat und / oder Mischungen aus mindestens zwei hieraus.

8. Hitzehärtbare Zweikomponenten-(2K)-Beschichtungsmassen nach einem der vorherigen Ansprüche, **dadurch gekennzeichnet, dass** das mindestens eine NCO-Prepolymer A) aus mindestens einem monomeren Polyisocyanat a), vorzugsweise einem monomeren Diisocyanat und mindestens einer NCO-reaktiven Komponente b) aufgebaut ist, wobei die NCO-reaktiven Komponente b) mindestens ein Polyol b1) mit einem zahlenmittleren Molgewicht Mₙ ≥ 500 g/mol und mindestens ein Polyol b2) mit einem zahlenmittleren Molgewicht Mₙ im Bereich von 62 g/mol bis 500 g/mol umfasst, wobei das zahlenmittlere Molgewicht Mₙ durch Gelpermeationschromatographie in Tetrahydrofuran bei 23°C gemäß DIN 55672-1:2016-03 bestimmt wird.

9. Hitzehärtbare Zweikomponenten-(2K)-Beschichtungsmassen nach einem der vorherigen Ansprüche, **dadurch gekennzeichnet, dass** das mindestens eine Polyurethanpolyol B) aus mindestens einem monomeren und / oder oligomeren Polyisocyanat c) und mindestens einer NCO-reaktiven Komponente d) aufgebaut sind, wobei die NCO-reaktiven Komponente d) mindestens ein Polyol d1) mit einem zahlenmittleren Molgewicht Mₙ ≥ 500 g/mol und mindestens ein Polyol d2) mit einem zahlenmittleren Molgewicht Mₙ im Bereich von 62 g/mol bis 500 g/mol umfasst, wobei das zahlenmittlere Molgewicht Mₙ durch Gelpermeationschromatographie in Tetrahydrofuran bei 23°C gemäß DIN 55672-1:2016-03 bestimmt wird.

10. Hitzehärtbare Zweikomponenten-(2K)-Beschichtungsmassen nach Anspruch 8 oder 9, **dadurch gekennzeichnet, dass** das mindestens eine Polyol b1) und das mindestens eine Polyol d1) ausgewählt ist aus der Gruppe bestehend aus Polyetherpolyolen, Polyesterpolyolen, Polycarbonatpolyolen, Polyethercarbonatpolyolen und Polyestercarbonatpolyolen oder einer Mischung aus mindestens zwei hiervon, wobei das Polyol b1) und das Polyol d1) vorzugsweise ein zahlenmittleres Molgewicht Mₙ, bestimmt durch Gelpermeationschromatographie in Tetrahydrofuran bei 23°C gemäß DIN 55672-1:2016-03, im Bereich von 500 bis 8000 g/mol, besonders bevorzugt in einem Bereich von 500 bis 7000 g/mol und noch bevorzugter in einem Bereich von 500 bis 6000 g/mol aufweist.

11. Hitzehärtbare Zweikomponenten-(2K)-Beschichtungsmassen gemäß Anspruch 8, **dadurch gekennzeichnet, dass** die NCO-reaktive Komponente b) mindestens 80 Gew.-%, vorzugsweise mindestens 85 Gew.-% an Polyol b1) enthält, bezogen auf das Gesamtgewicht der Komponente b), wobei das Polyol b1) ein PolyTHF-Polyether ist vorzugsweise mit einem zahlenmittleren Molgewicht Mₙ im Bereich von 1000 g/mol bis 2000 g/mol bestimmt durch Gelpermeationschromatographie in Tetrahydrofuran bei 23°C gemäß DIN 55672-1:2016-03.

12. Verfahren zur Herstellung der Zweikomponenten-(2K)-Beschichtungsmassen nach einem der vorherigen Ansprüche, **dadurch gekennzeichnet, dass** die Komponenten A), B), C1), C2), D) und E) direkt miteinander vermischt werden.

13. Verfahren zur Direkt- und Umkehrbeschichtung von Substraten mittels hitzehärtbarer Beschichtungssysteme als Deck-, Haft-, Zwischen-, oder Schaumstrich, **dadurch gekennzeichnet, dass** Beschichtungsmassen gemäß einem der Ansprüche 1-11 eingesetzt werden.

14. Verbundstrukturen, enthaltend gehärtete Beschichtungsmassen gemäß einem der Ansprüche 1-11 und mindestens ein Substrat.

15. Verwendung von Beschichtungsmassen gemäß einem der Ansprüche 1-11 zur Herstellung von elastischen Beschichtungen oder elastischen Filmen auf Substraten.

16. Verfahren gemäß Anspruch 13, Verbundstruktur gemäß Anspruch 14 oder Verwendung gemäß Anspruch 15, **dadurch gekennzeichnet, dass** die Substrate textile Materialien oder Leder sind.
